Europäisches Patentamt

European Patent Office

Office européen des brevets

(19)

(11) **EP 1 316 070 B1**

(12) ## EUROPEAN PATENT SPECIFICATION

(45) Date of publication and mention
of the grant of the patent:
**23.11.2005 Bulletin 2005/47**

(21) Application number: **01969005.6**

(22) Date of filing: **07.09.2001**

(51) Int Cl.⁷: $G06T\ 15/00$

(86) International application number:
**PCT/US2001/042047**

(87) International publication number:
**WO 2002/021448 (14.03.2002 Gazette 2002/11)**

(54) **RASTERIZATION OF POLYTOPES IN CYLINDRICAL COORDINATES**

POLYTOPE AUFRASTERUNGSTECHNIK IN ZYLINDRISCHEN KOORDINATEN

TRAMAGE DE POLYTOPES EN COORDONN ES CYLINDRIQUES

(84) Designated Contracting States:
**AT BE CH CY DE DK ES FI FR GB GR IE IT LI LU
MC NL PT SE TR**

(30) Priority: **07.09.2000 US 230972 P
09.04.2001 US 828770**

(43) Date of publication of application:
**04.06.2003 Bulletin 2003/23**

(73) Proprietor: **Actuality Systems, Inc.
Reading, MA 01867 (US)**

(72) Inventor: **NAPOLI, Joshua
New Smyrna Beach, FL 32169 (US)**

(74) Representative: **Kramer - Barske - Schmidtchen
European Patent Attorneys
Patenta
Radeckestrasse 43
81245 München (DE)**

(56) References cited:
**US-A- 4 983 031**

• **B. LACOTTE: "elimination of keystone and
crosstalk effects in stereoscopic video"
RAPPORT TECHNIQUE DE
L'INRS-TELECOMMUNICATIONS. NO 95-31, 22
December 1995 (1995-12-22), pages 1-27,
XP002190026 Quebec, Canada**

## Description

This invention relates to computer graphics, and in particular, to the rendering triangles and other polytopes in a volumetric display in which the voxels are arranged on a cylindrical coordinate grid.

## CLAIM OF PRIORITY

Under 35 USC § 129(e)(1), this application claims the benefit of the priority date of U.S. Provisional Patent Application Serial No. 60/242,972, filed on September 7,2000, the contents of which are herein incorporated by reference.

## BACKGROUND

Many computer-implemented displays consist of two-dimensional arrays of individual picture elements, or pixels. To form an image, a rasterizer selectively illuminates these pixels. Because the individual pixels are so small, the display appears, to a human viewer, to be a continuous rendering of an image. This illusion is particularly effective for complex images of continuous tones such as photographs.

For simple geometric shapes, however, the pixelated nature of the display can become apparent to.the human viewer. For example, if the rasterizer is instructed to draw a surface, there is no guarantee that the points on that surface will coincide with the pixels that are available for rendering it. As a result, a desired surface is often rendered as a set of pixels that are close to, but not necessarily coincident with, the desired surface. This results in surfaces that have a jagged or echeloned appearance.

A surface is typically formed by combining a large number of small surface elements. Thus, in the course of rendering a surface, a large number of polygonal surface elements are drawn. Because of the ease with which it can be assembled to form surfaces having complex curves, a particularly suitable polygonal surface element is a triangular surface element.

To render a surface element, the rasterizer must frequently select those pixels that will minimize the jagged appearance of the resulting surface element. A straightforward mathematical approach is to use the equations of the lines defining the edges of the surface element and to derive the equation of a plane containing those lines. The rasterizer can then choose pixels whose coordinates minimize a least-square error across all points on the line. While such an approach has the advantage of globally optimizing the selection of pixels on the surface element, the large number of floating-point operations required causes this approach to be prohibitively time-consuming.

To meet constraints on speed, rasterizers typically implement rasterization methods that avoid time-consuming floating-point operations. However, known rasterization methods rely on the assumption that the array of pixels is arranged in a uniform rectangular grid that can readily be modeled by a cartesian coordinate system. This was a reasonable assumption given the prevalence of two-dimensional displays such as computer monitors and printers at the time such algorithms were developed.

Since then, however, volumetric, or three-dimensional displays have been developed. Such displays permit the generation, absorption, or scattering of visible radiation from a set of localized and specified regions within a volume. Examples of such systems are taught in Hirsch U.S. Patent No. 2,967,905, Ketchpel U.S. Patent No. 3,260,424, Tsao U.S. Patent No. 5,754,147, and on pages 66-67 of Aviation Week, October 31, 1960.

In such displays, the more natural coordinate system is a cylindrical coordinate system. Because of the unusual properties of the cylindrical coordinate system, rasterization methods for Cartesian coordinate systems cannot readily be applied to rasterize surfaces in a cylindrical coordinate system.

## SUMMARY

The method of the invention according to claim 1 or 8 provides for rapid rendering of a polytope in a volumetric display having a rotatable screen. The method includes stepping the rotatable screen through a sequence of angular positions. At each angular position, a rasterized approximation of a polygon is rendered on the screen. The geometry of the polygon is indicative of the projection of a section of the polytope onto the screen.

In one aspect of the invention, the screen is positioned at a first angular position in which the screen is coplanar with an entry plane. First and second pluralities of voxels are then selected on the basis of the geometric relationship between the polytope and the entry plane. In particular, the first plurality of voxels corresponds to an intersection of the polytope with the entry plane; and the second plurality of voxels corresponds to a projection, onto the entry plane, of an intersection of the polytope with an exit plane. A polygon defined by the first and second pluralities of voxels is then rendered on the two-dimensional imaging screen.

Another aspect of the rasterization method includes partitioning the polytope into a plurality of polytope sections, each of which is disposed in an active slice defined by an entry plane and an exit plane. The presence of the imaging screen within an active slice is then detected. Once the imaging screen is in the active slice, a connecting polygon is rendered on the imaging screen. This polygon is derived from the projection of the polytope section on the entry plane.

The polytope can be a figure that is contained in a single plane. The planar figure can be a triangle, or quadrilateral, a circle, a conic section, or any other planar shape.

In some cases, the optical layout of a volumetric display introduces distortions that are corrected by additional, optional steps in the method. For example, the distortion introduced by rotation of the imaging screen can be corrected by generating rotated coordinates corresponding to the first voxel, the rotated coordinates corresponding to rotation about a selected angle. Similarly, correction of distortion resulting from keystoning can be achieved by generating projected coordinates corresponding to the first voxel, the projected coordinates being obtained by correction for keystone distortion.

These and other features and advantages of the invention will be apparent from the following detailed description, and the figures, in which:

## BRIEF DESCRIPTION OF THE FIGURES

FIG. 1 is a volumetric display;

FIG. 2 is a planar view of the display volume;

FIG. 3 shows the projection of a triangle onto an entry plane to define a connecting polygon; and

FIG. 4 is a planar view of a set of connecting polygons that together sweep out a triangle.

## DETAILED DESCRIPTION

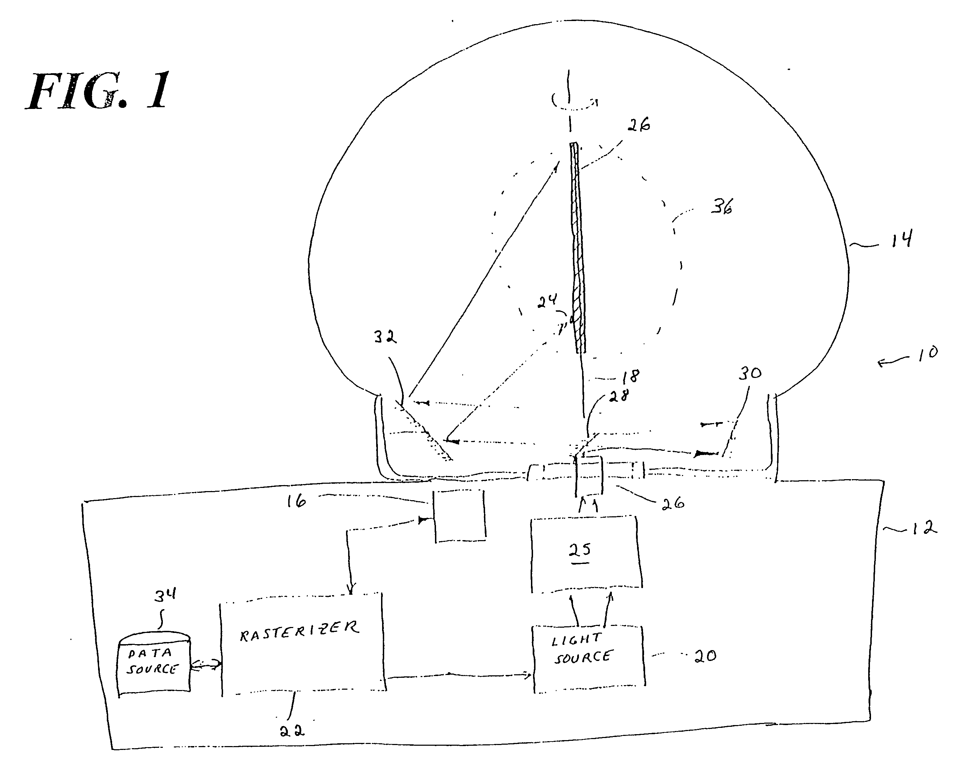

A volumetric display **10** for practice of the invention, shown in FIG. 1, includes a base section **12** and a rotating section **14.** A motor controller **16** causes a motor (not shown) to spin the rotating section **14** rapidly about a spin axis **18** coupled to the base section **12.**

Within the base section **12**, a light source **20,** under the control of a rasterizer **22,** generates a spatially varying pattern of light for illuminating selected pixels **24** on a rotatable imaging screen **26** at successive instants. A typical light source **20** includes a micro-mechanical array of individually addressable mirrors whose orientations are under the control of the rasterizer **22**. This light is passed into the rotating section **14** through a stationary optical subsystem **25** in optical communication with a rotating optical subsystem **26** coupled to the rotating section **14** and coaxial with the axis **18.**

Light from the rotating optical subsystem **26** is projected onto a central mirror **28** disposed above the rotating optical subsytem **26** and angled to direct light toward a first relay mirror **30** disposed at the periphery of the base section **12.** The first relay mirror **30** is angled to reflect light to a second relay mirror **32** at the periphery of the base section **12.** The second relay mirror **32** is angled to direct light from the first relay mirror **30** toward the imaging screen **26.**

The pixels to be illuminated on the imaging screen **26**, and the instants at which they are to be illuminated, are determined by the rasterizer **22** on the basis of data indicative of the angular position of the imaging screen **26** (as supplied by the motor controller **16**) and data descriptive of a three-dimensional image (as stored in a data source **34**).

As the rotating section **14** spins around the axis **18,** the imaging screen **26** sweeps out a display volume **36** within the rotating section **14**. If the rotating section **14** were to spin rapidly enough, and if the successive instants of illumination were to be separated by sufficiently brief time intervals, a continuous curve would appear to hang in midair within the display volume **36.**

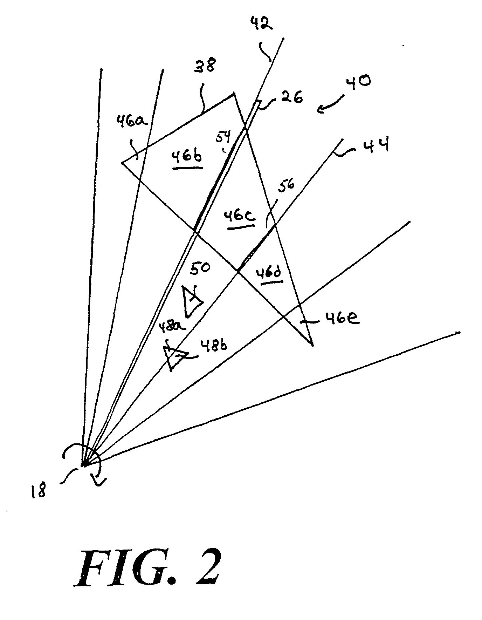

FIG. 2 illustrates the projection onto a plane perpendicular to the axis **18** of a desired polytope, in this case a triangle **38** to be approximated by the rasterizer **22**. The imaging screen **26** rotates continuously about the axis **18,** passing through threshold angular positions indicated by the radial lines in FIG. 2. At each of the angular positions, the light source **20,** under the control of the rasterizer **22,** illuminates selected pixels **24** on the imaging screen **26.** As shown in FIG. 2, by illuminating the correct pixels at the correct times, it is possible to trace out a rasterized surface that approximates the desired triangle **38**. It is the function of the rasterizer **22** to control the light source **20** so as to trace out the desired triangle **38** in this manner.

In the volumetric display **10** of FIG. 1, the rasterizer **22** causes a sequence of images to be projected onto the imaging screen **26**. The particular image displayed on the imaging screen **26** depends on the angular position of the imaging screen **26** as it rotates about its axis **18.** The image does not, however, vary continuously with angular position of the screen **26.** Instead, the displayed image remains constant for a particular range of angular positions, changing only when the angular position of the screen **26** crosses one of the threshold angles shown in FIG. 2. These threshold angles are typically equally spaced and very close together. In the illustrated embodiment, the angular separation between threshold angles is between 30 minutes and 1 degree of arc.

The display volume **36** of the volumetric display **10** can thus be viewed as a union of wedge-shaped slices **40** that intersect at the spin axis **18.** In the cross-sectional view of FIG. 2, each slice **40** is bounded by first and second bounding planes defined by the threshold angles for that slice **40.** The two bounding planes are referred to as the "entry plane **42"** and the "exit plane **44"** for that slice **40.** As the screen **26** rotates about the spin axis **18,** it becomes momentarily coplanar with the entry plane **42** for a particular slice **40.** It then traverses that slice **40,** and becomes coplanar with the exit plane **44** for that same slice **40.** As is apparent from FIG. 2, the exit plane **44** for an active slice **40** is thus coplanar with the entry plane for a following slice. When the imaging screen **26** is coplanar with any entry plane **42,** the image displayed on the screen **26** is permitted to change. As the imaging screen **26** traverses an active slice **40,** the image displayed on the screen **26** remains constant.

Data generally available to the rasterizer **22** for drawing the desired triangle **38** includes data from which the cartesian coordinates of the desired triangle's vertices $V_0$, $V_1$, $V_2$ can be obtained. From these vertices, it is possible to derive equations of line that define the sides $L_1$, $L_2$, $L_3$ of the desired triangle **38.** As an example, if $(x_0, y_0, z_0)$ and $(x_1, y_1, z_1)$ are two of the vertices of the triangle **38,** the following constants descriptive of a first side $L_0$ of the desired triangle **38** can be calculated:

$$\theta_t = \arctan(\frac{y_1 - y_0}{x_1 - x_0})$$

$$d = \frac{|x_0 \cdot y_1 - x_1 \cdot y_0|}{\sqrt{(x_1 - x_0)^2 + (y_1 - y_0)^2}}$$

$$\gamma = \frac{d \cdot (z_1 - z_0)}{\sqrt{(x_1 - x_0)^2 + (y_1 - y_0)^2}}$$

$$h_t = z_0 - \frac{(x_0 \cdot (x_1 - x_0) - y_0 \cdot (y_1 - y_0)) \cdot (z_1 - z_0)}{(x_1 - x_0)^2 + (y_1 - y_0)^2}$$

These constants need only be computed once for each desired triangle **38.** In the illustrated embodiment, $d$ is an 18-bit fixed point signed number, $h_t$ is a 40-bit fixed point number, and $\gamma$ is a 18-bit fixed point signed number.

To improve performance, values of $\theta_t$ are obtained from a look-up table. The look-up table is kept as small as possible by selecting a resolution of $\theta_t$ that is coarse, but not so coarse as to significantly degrade the accuracy of the rasterization. In particular, if the resolution of $\theta_t$ is coarser than the $\theta$ resolution of the display space, values of $\theta$ corresponding to different planes can be mapped to the same $r$ and $h$ values. This causes an undesirable loss of resolution in the $\theta$ direction.

In the illustrated embodiment, the number of entries in the look-up table is double the $\theta$ resolution of the display space. This ratio provides sufficient accuracy to eliminate most visual artifacts and to avoid degrading the minimum resolution of the display **10.**

Given these constants, the rasterizer **22** then obtains the cylindrical coordinates of the intersections of the desired triangle **38** with each of the exit and entry planes **42,44,** as shown in FIG. 2. These intersections are lien segments having end points given by

$$r(\theta) = d \cdot \sec(\theta - \theta_t)$$

$$h(\theta) = h_t + \gamma \cdot \tan(\theta - \theta_t)$$

where $\theta$ is the angle associated with a particular plane.

As is apparent from FIG. 2, a desired triangle **38** generally spans several slices. In such case, the slices divide the triangle **38** into triangle-sections **46a-e.** Each slice contains one triangle-section. In most cases, a triangle-section **46c-d** does not contain a vertex of the triangle **38**. In other cases, a triangle-section **46a-b, 46e, 48a-b** contains one or two vertices. In still other cases, a desired triangle **50** is so small that it is contained within one slice. In such a case, the triangle-section **50** (which is also the triangle itself) contains all three vertices.

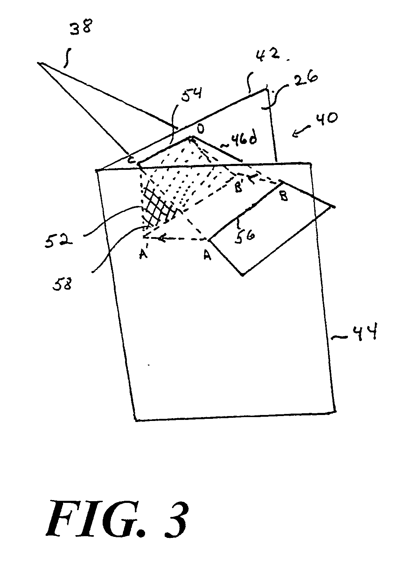

Referring to FIG. 3, when the imaging screen **26** becomes coplanar with an entry plane **42** of a slice **40,** the rasterizer projects the triangle-section **46d** associated with that slice **40** onto the imaging screen **26.** This projection results in the formation of a connecting polygon **52** on the imaging screen **26.** In most cases, as shown in FIG. 3, the connecting polygon **52** on the imaging screen **26** is a quadrilateral. In some cases, depending on the size and orientation of the triangle **38,** the connecting polygon **52** can have as few as three or as many as five sides.

The rasterizer **22** then fills in that connecting polygon **52** using a conventional two-dimensional region filling algorithm. The connecting polygon **52,** now filled, remains on the imaging screen **26** as the imaging screen **26** traverses the slice **40.** When the imaging screen **26** reaches the exit plane **44** for the slice **40,** the rasterizer **22** removes the connecting polygon **52** and replaces it with another connecting polygon **52,** formed by projecting the triangle-section associated with the succeeding slice **54.** Because the connecting polygon **52** that the rasterizer **22** places on the screen is formed by projection of the triangle-sections onto the entry plane **42,** the connecting polygon **52** associated with one-triangle-section merges imperceptibly into the connecting polygon **52** associated with the succeeding triangle-section.

In most cases, as shown in FIGS. 2 and 3, the triangle **38** will intersect both the entry place **42** and the exit plane **44** of a slice **40.** Under these circumstances, a first side *CD* of the connecting polygon **52** is the line segment formed by the intersection of the triangle **38** with the entry place **42.** A second side of the connecting polygon **52** is the projection *A'B',* onto the entry plane **42,** of the line segment formed by the intersection *AB* of the triangle **38** with the exit plane **44.** The remaining two sides of the connecting polygon **52** are formed by connecting the first side CD and second side *A'B'* such that the resulting connecting polygon **52** is convex.

In other cases, the triangle intersects the slice's entry plane **42** but does not intersect the slice's exit plane **44.** This typically occurs when one or more vertices of the triangle are within the slice **40.** When this is the case, a first side of the connecting polygon **52** is the line segment formed by the intersection of the triangle with the entry plane **42.** The remaining sides of the connecting polygon **52** are formed by projecting those vertices of the triangle **38** that are within the slice **40** onto the entry plane **42.** The remaining sides are then connected to so as to form a convex connecting polygon **52.**

Conversely, the triangle **38** might intersect the slice's exit plane **44** but not its entry plane **42.** This can also occur when one or more vertices are within the slice **40.** In this case, a first side of the connecting polygon **52** is the projection, onto the entry plane **42,** of the intersection of the triangle **38** with the exit plane **44.** The remaining sides of the connecting polygon **52** are formed by projecting the vertices onto the entry plane **42** and connecting the first side to the projected vertices so as to form a convex connecting polygon **52.**

Finally, a triangle **38** can be completely within a slice **40,** in which case the triangle **38** intersects neither the slice's entry plane **42** nor its exit plane **44.** In this case, the connecting polygon **52** is the projection of the triangle **38** on the entry plane **42.**

For triangle-sections that do not include a vertex of the triangle, the rasterizer **22** determines line segmenents defining the intersections of the triangle **38** with both the entry plane **42** and the exit plane **44** (hereafter referred to as the "entry segment **54"** and "exit segment **56",** respectively) as described above and illustrated in FIG. 3. When the screen **26** becomes coplanar with the entry plane **42,** the rasterizer **22** renders voxels corresponding to the entry segment **54.** In addition, the rasterizer **22** determines the projection of the exit segment **56** (hereafter referred to as the "projected exit-segment **58"**) onto the entry plane **42,** as shown in FIG. 3. This defines the connecting polygon **52** on the screen **26.** The connecting polygon's sides include the entry segment **54** and the projected exit-segment **58.** The rasterizer **22** then renders voxels on the screen **26** that fill this connecting polygon **52.** This rasterization is carried out using conventional two-dimensional polygon-filling algorithms.

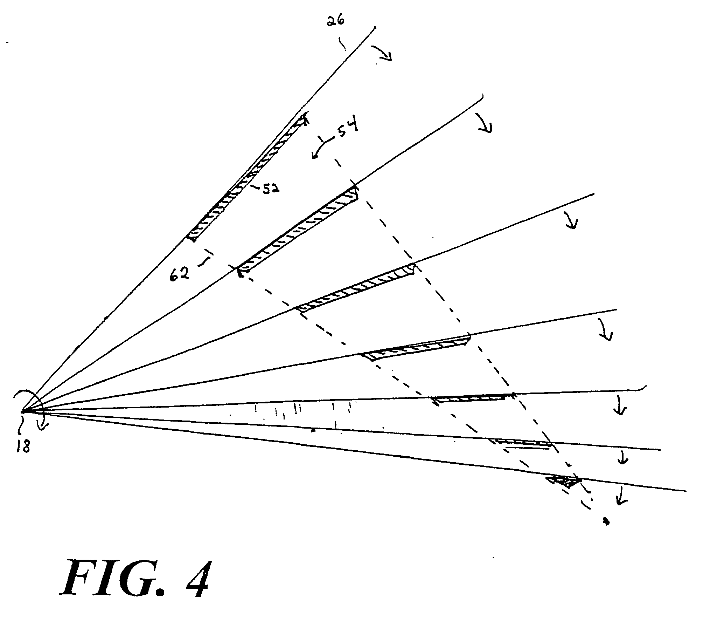

As the screen **26** traverses the slice **40,** the connecting polygon **52** rendered on that screen **26** traces out a prism **62** having a cross-section corresponding to that of the connecting polygon **52,** as shown in the transverse cross-section of FIG. 4.

As the screen **26** approaches the exit plane **44,** the projected exit-segment **58** approaches the exit segment **56.** This exit segment **56** is also the entry segment **54** for the following slice **33.** As a result, the prisms **62** traced out by the succession of connecting polygons **52** appear to merge smoothly into each other, resulting in the display of a triangle in three dimensions.

The rasterization method of the invention thus rasterizes a triangle in a cylindrical coordinate system by rasterizing a sequence of connecting polygons **52** on the imaging screen **26** as that imaging screen **26** sweeps out a cylinder in a three-dimensional volume.

Certain volumetric display devices, such as the one illustrated in FIG. 1, introduce particular image distortions that require correction. By appropriately rotating and projecting the cylindrical coordinate system, the rasterization method corrects for these image distortions.

A first type of image distortion is made apparent when the light source **20** projects a static image on the spinning imaging screen **26**. When it does so, the static image will appear to rotate about the center of the imaging screen **26**. This type of distortion is referred to as "rotational distortion."

A second type of distortion is made apparent when the light source **20** projects an image of a rectangle on the imaging screen **26**. When it does so, the rectangle appears distorted into a keystone. This type of distortion, referred to as "keystone distortion," occurs because the optical path from the bottom of the image on the screen **26** to the focus of the light source **20** is shorter than the optical path from the top of the image to the focus. Consequently, the top portion of the image projected by the light source **20** undergoes greater magnification than the bottom portion of the image.

For display devices that require correction for keystone and rotation distortions, it is desirable to execute an additional step between the calculation of cylindrical coordinates of the entry segment **54** and the projected exit-segment **58** and the rasterization of the connecting polygon **52.** The cylindrical coordinates of a point on the entry segment **54** and a point on the projected exit-segment **58** are calculated to have angle, radius and height of $(\theta_1, r_1, h_1)$ and $(\theta_2, r_2, h_2)$, respectively. The keystone distortion is corrected by a projection operation on the vectors $(r_1, h_2)$ and $(r_2, h_2)$ to give vectors $(r_1', h_1')$ and $(r_2', h_2')$. The rotation of the image of the light source **20** on the screen **26** is corrected by an opposite rotation about the center of the screen **26**. The vector $(r_1', h_1')$ is rotated by an angle $-\theta_1$, resulting in a vector $(x_1, y_1)$. The vector $(r_2', h_2')$ is rotated by an angle $-\theta_2$, resulting in a vector $(x_2, y_2)$. The vector $(x_1, y_1)$ specifies a point on the light source **20** that must be illuminated to render a corresponding point on the entry segment **54** on the imaging screen **26** at the instant when the rotating section **14** is rotated to an angle $\theta_1$. The vector $(x_2, y_2)$ likewise specifies a point on the light source that must be illuminated to render a corresponding point on the projected exit-segment **58** on the imaging screen **26** at the instant when the rotating section **14** is rotated to an angle $\theta_2$. The connecting polygon **52** is filled on the light source **20** using sides defined by the coordinates $(x_1, y_1)$ and $(x_2, y_2)$. Display designs resulting in optical paths that differ from that shown in FIG. 1 may require one or the other, or none of the foregoing distortion corrections.

While the invention has been described in above in the context of rasterizing a triangular surface in a cylindrical coordinate system, the principles described herein are nevertheless applicable to the rasterization of other two dimensional figures, generally referred to as "polytopes". As used herein, "polytope" means the smallest convex region that includes a set of points; and "edge" means the line segment between two corners, or vertices, of a polytope.

In the more general case of rendering a polytope, an entry segment **54** defines the intersection of the polytope with an entry plane **42** and an exit segment **56** defines the intersection of the polytope with an exit plane **44.** The intersection of the polytope with the exit plane **44** is then projected onto the entry plane **42** to form two sides of a connecting polygon **52.** The connecting polygon **52** is then rasterized by any of a number of known two-dimensional polygon filling algorithms. This technique applies whether the polytope is a triangle, as described herein, a polygon, a circle, a conic section, or any other two-dimensional polytope.

As the imaging screen **26** spins, each slice **40** that intersects the polytope is made active once. For each active slice **40,** the rasterizer **22** defines a polytope-section to be the cylindrical grid points that are both within the active slice **40** and within the polytope. The rasterizer **22** then determines the intersection of the polytope-section with the bounding planes of the active slice **40.**

A polytope $P$ is defined by a rectilinear edge-list $E$ in which each edge is indexed and identified by Carterisan coordinates of its two endpoints. To enable changes to this list to be made more efficiently, a list of edge start-points and edge end-points sorted by $\theta$-position is maintained.

The rasterization method is initialized by deriving a cylindrical edge-list $E'$ from the rectilinear edge-list $E$. The coordinates of the endpoints are then converted from cartesian to cylindrical coordinates and the line constants in the cylindrical coordinate system are calculated. Next, first and second endpoint-lists, $L_b$ and $L_e$ and, are derived. The first endpoint-list $L_b$ is a list of edge leading endpoints, sorted by $\theta$-value. The second endpoint-list $L_e$ is a list of edge trailing endpoints, sorted by $\theta$-value. Each list entry in the first and second endpoint-lists includes the endpoint position and a reference to its respective line.

Additional lists to be initialized include an active edge-list, $A$, and first and second slice vertex-lists $I_b$ and $I_e$. The active-edge list $A$ will contain references to the cylindrical edge-list $E'$ indicating which edges intersect the active slice **40.** The first and second slice vertex-lists $I_b$ and $I_e$ will contain two-dimensional coordinates indicating the position of intersections of edges with the entry and exit planes of a slice **40.** In particular, the first slice-vertex-list $I_b$ will contain the intersections of edges with the entry plane **42** of the active slice **40** and the second slice vertex-list $I_e$ will contain the intersections of edges with the exit plane **44** of the active slice **40.** First and second pointers $p_b$ and $p_e$ point to the first entries of the first and second endpoint-lists $L_b$ and $L_e$, respectively. These indices keep track of the next endpoints to be encountered.

Following initialization, the rasterization method includes scanning through those slices **40** that intersect the polytope. For each slice **40** between the slice identified by the first entry in first endpoint-list $L_b$ and the slice identified by the last entry in the second endpoint list $L_e$, the rasterizer **22** executes the loop described below.

First, the rasterizer **22** moves the second slice-vertex-list $I_e$ to the first slice-vertex-list $I_b$. This sets the polytope's intersection with the exit plane **44** of the previous slice to be the same as the polytope's intersection with the entry plane **42** of the active slice **40**. Then, the rasterizer **22** clears the second slice-vertex-list $I_e$. A new second slice-vertex-list $I_e$ specific to this slice **40** will be calculated subsequently.

While the first pointer $p_b$ points to a vertex in this slice **40**, the rasterizer **22** adds that vertex to the first slice-vertex-list $I_b$, adds the edge to the active edge-list $A$, and advances the first pointer $p_b$. While the second pointer $p_e$ points to a vertex in this slice **40**, the rasterizer **22** adds the vertex to the first slice-vertex-list $I_b$, adds the edge to the active edge-list $A$, and advances the second pointer $p_e$.

For each edge in the active edge-list $A$, the rasterizer **22** calculates the intersection of that active edge with the exit plane **44** of the slice **40**. This intersection is then added to the second slice-vertex-list $I_e$.

Finally, when the first and second slice-vertex-lists $I_b$ and $I_e$ are filled, the rasterizer **22** draws, on the imaging screen **26**, the convex hull of the union of the points in the first and second slice vertex-lists $I_b$ and $I_e$. The rasterizer **22** then and fills the interior of the convex hull.

The source code in the attached appendix teaches a particular implementation of the foregoing rasterization method for triangles. In the source code, the variable "x" is a vector and variables beginning with "q" are angles. The functions, procedures, data structures, and other software entities whose meanings are not immediately apparent are defined as follows:

| | |
|---|---|
| int | a type specifier that indicates 32-bit integer. |
| long40 | a type specifier that indicates a 40-bit integer. |
| ang_slice_inc(q) | returns the angle of the slice following q. |
| slice_number(q) | returns the slice number of an angle q. |
| jline_pos(...) | calculates a cylindrical position on a line given an angle and cylindrical line constants. |
| cyln2helios(q,x) | converts a cylindrical point into a physical location by correcting for keystoning and rotational distortions. |
| _he_poly5(...) | draws a 5-sided polygon in the specified slice |
| _he_poly4(...) | draws a 4-sided polygon in the specified slice |
| _he_poly3(...) | draws a 3-sided polygon in the specified slice |
| packet triangle | a data structure that encodes information about a triangle. Its members are:<br>t0, r0, h0 = coordinates of vertex 0<br>t1, r1, h1 = coordinates of vertex 1<br>t2,r2,h2 = coordinates of vertex 2<br>L1, L1, L2 = cylindrical line constants, where<br>    L0 is the line from vertex 0 to vertex 2.<br>    L1 is the line from vertex 0 to vertex 1.<br>    L2 is the line from vertex 1 to vertex 2. |
| packet_line_k_decode(...) | decodes cylindrical line constants from the above packet_triangle structure. |

The following source code makes reference to a projected coordinate system. The projected coordinate system is related to the cylindrical coordinate system described above through tumbling and keystoning operations. These operations are shown as italicized text in the following source code.

Having described the invention, and a preferred embodiment thereof, what is claimed as new and secured by letters patent is:

**APPENDIX**

```
/* Draw the region between L0 and L1, not including the slice containing q_end.
   x0,x1 are the coordinates of the slice prior to q */
void jtriangle_sub(
        int q,      int d_gamma0, int phi_gs0, long40 h_t0,
        int q_end, int d_gamma1, int phi_gs1, long40 h_t1 )
{
  int x0,  x1;
  int x0_, x1_;

  if( q_end==q )
    return;

  x0_ = jline_pos(q,d_gamma0,phi_gs0,h_t0);
  x1_ = jline_pos(q,d_gamma1,phi_gs1,h_t1);
  q = ang_slice_inc(q);

  while( q != q_end ) {
    /* intersection of edges with leading edge of slice */
    x0 = x0_; /* same as trailing edge intersections from previous slice */
    x1 = x1_;

    /* intersection of edges with trailing edge of slice */
    x0_ = jline_pos(q,d_gamma0,phi_gs0,h_t0);
    x1_ = jline_pos(q,d_gamma1,phi_gs1,h_t1);

    _he_poly4( q, 7, x0, x1, x0_, x1_ );

    q = ang_slice_inc(q);
  }
}


/* Draw the region between L0 and L1, starting from L1->end0, going until L1->end1.
   The slice containing L1->end1 is drawn. */
void jtriangle_general_region(
        int q0, int d_gamma0, int phi_gs0, long40 h_t0,
        int q1, int d_gamma1, int phi_gs1, long40 h_t1 )
{
  int q_begin, q_end;

  /* Draw front scan */
  q0 |= 3; /* Always calculate trailing edge of slice */
  q1 |= 3;
  q_begin = q0;
  q_end = q1;
  jtriangle_sub(q_begin,d_gamma0,phi_gs0,h_t0,
                q_end,  d_gamma1,phi_gs1,h_t1);

  /* Draw back scan */
  q_begin = ang_fixup( q_begin + TRIG_PI );
  q_end = ang_fixup( q_end + TRIG_PI );
  jtriangle_sub(q_begin,d_gamma0,phi_gs0,h_t0,
                q_end,  d_gamma1,phi_gs1,h_t1);
}

void jtriangle_general_1_sub( int q, const struct packet_triangle * t )
{
  int x[3];
  int d_gamma[2], phi_gs[2];
  long40 h_t[2];
  int Q;
  int T;

  q |= 3;
  Q = slice_number(q);

  packet_line_k_decode(d_gamma[0],phi_gs[0],h_t[0],t->L0);
  packet_line_k_decode(d_gamma[1],phi_gs[1],h_t[1],t->L1);

  x[0] = cyln2helios(q, (t->r0&0xffff)|(t->h0<<16));

  /* intersection of leading edge of slice and minor edge L1 */
  T = slice_number(t->t1);
  if( Q != T )
    x[1] = jline_pos(q|3, d_gamma[1], phi_gs[1], h_t[1]);
  else /* L1 ends in Q */
    x[1] = cyln2helios(q, (t->r1&0xffff)|(t->h1<<16));
```

```
    /* intersection of leading edge of slice and minor edge L0 */
    T = slice_number(t->t2);
    if( Q != T )
      x[2] = jline_pos(q|3, d_gamma[0], phi_gs[0], h_t[0]);
    else /* L0 ends in Q */
      x[2] = cyln2helios(q, (t->r2&0xffff)|(t->h2<<16));

    _he_poly3(q,7, x[0],x[1],x[2]);
}

void jtriangle_general_5_sub( int q, const struct packet_triangle * t )
{
    int x[3];
    int d_gamma0, phi_gs0;
    long40 h_t0;
    int d_gamma2, phi_gs2;
    long40 h_t2;
    int q_;
    int Q, Q_;
    int T;

    q  |= 3; /* Always calculate trailing edge of slice */
    q_ = ang_scan_dec(q);
    Q  = slice_number(q);
    Q_ = slice_number(q_);

    packet_line_k_decode(d_gamma0,phi_gs0,h_t0,t->L0);
    packet_line_k_decode(d_gamma2,phi_gs2,h_t2,t->l2);

    /* intersection of slice and minor edge l2 */
    T = slice_number(t->t1);
    if( T != Q )
      x[0] = jline_pos(q_,d_gamma2,phi_gs2,h_t2);
    else /* l2 begins in Q */
      x[0] = cyln2helios(q, (t->r1&0xffff)|(t->h1<<16));

    /* intersection of slice and major edge L0 */
    T = slice_number(t->t0);
    if( T != Q )
      x[1] = jline_pos(q_,d_gamma0,phi_gs0,h_t0);
    else /* L0 begins in Q */
      x[1] = cyln2helios(q, (t->r0&0xffff)|(t->h0<<16));

    /* (r2,h2) corner of triangle */
    x[2] = cyln2helios(q,(t->r2&0xffff)|(t->h2<<16));

    _he_poly3(q,7, x[0],x[1],x[2]);
}


/* First slice: 3-sided */
void jtriangle_general_1( const struct packet_triangle * t )
{
    int q;

    /* Front scan */
    q = t->t0;
    jtriangle_general_1_sub( q, t );

    /* Back scan */
    q = ang_fixup(q+TRIG_PI);
    jtriangle_general_1_sub( q, t );
}

/* General slices: 4-sided; draw the region between L0 and L1 */
void jtriangle_general_2( const struct packet_triangle * t )
{
    int    d_gamma0,d_gamma1;
    int    phi_gs0,phi_gs1;
    long40 h_t0,h_t1;

    packet_line_k_decode(d_gamma0,phi_gs0,h_t0,t->L0);
    packet_line_k_decode(d_gamma1,phi_gs1,h_t1,t->L1);

    jtriangle_general_region( t->t0,d_gamma0,phi_gs0,h_t0,
                              t->t1,d_gamma1,phi_gs1,h_t1 );
}

/* Middle slice: 5-sided */
```

```
void jtriangle_general_3( const struct packet_triangle * t )
{
    int d_gamma[3], phi_gs[3];
    long40 h_t[3];
    int q,    Q;
    int q_l, Q_l;
    int q_r, Q_r;
    int xx;
    int T0 = slice_number(t->t0);
    int T2 = slice_number(t->t2);

    packet_line_k_decode(d_gamma[0],phi_gs[0],h_t[0],t->L0);
    packet_line_k_decode(d_gamma[1],phi_gs[1],h_t[1],t->L1);
    packet_line_k_decode(d_gamma[2],phi_gs[2],h_t[2],t->l2);
    xx = (t->r1&0xffff)|(t->h1<<16);

    q   = t->t1;
    q_l = ang_fixup(t->t1-4);
    q_r = ang_fixup(t->t1+4);
    Q   = slice_number(q);
    Q_l = slice_number(q_l);
    Q_r = slice_number(q_r);

    if( Q_l!=T0 && Q!=T0 && Q_r!=T2 && Q!=T2 ) {
        int x[5];

        /* Draw front scan */
        x[0] = jline_pos(q_l,d_gamma[0],phi_gs[0],h_t[0]);
        x[1] = jline_pos(q_l,d_gamma[1],phi_gs[1],h_t[1]);
        x[2] = cyln2helios(q,xx);
        x[3] = jline_pos(q_r,d_gamma[2],phi_gs[2],h_t[2]);
        x[4] = jline_pos(q_r,d_gamma[0],phi_gs[0],h_t[0]);
        _he_poly5( q, 7, x[0], x[1], x[2], x[3], x[4] );

        /* Draw back scan */
        q   = ang_fixup(q+TRIG_PI);
        q_l = ang_fixup(q_l+TRIG_PI);
        q_r = ang_fixup(q_r+TRIG_PI);

        x[0] = jline_pos(q_l,d_gamma[0],phi_gs[0],h_t[0]);
        x[1] = jline_pos(q_l,d_gamma[1],phi_gs[1],h_t[1]);
        x[2] = cyln2helios(q,xx);
        x[3] = jline_pos(q_r,d_gamma[2],phi_gs[2],h_t[2]);
        x[4] = jline_pos(q_r,d_gamma[0],phi_gs[0],h_t[0]);
        _he_poly5( q, 7, x[0], x[1], x[2], x[3], x[4] );
    } /* otherwise either jtriangle_general_1 or jtriangle_general_5 will handle this slice */
}

/* General slices: 4-sided */
void jtriangle_general_4( const struct packet_triangle * t )
{
    unsigned int d_gamma0,d_gamma1;
    unsigned int phi_gs0,phi_gs1;
    long40      h_t0,h_t1;

    packet_line_k_decode(d_gamma0,phi_gs0,h_t0,t->L0);
    packet_line_k_decode(d_gamma1,phi_gs1,h_t1,t->l2);

    jtriangle_general_region( t->t1,d_gamma0,phi_gs0,h_t0,
                              t->t2,d_gamma1,phi_gs1,h_t1 );
}

/* Final slice: 3-sided */
void jtriangle_general_5( const struct packet_triangle * t )
{
    int q;

    /* Front scan */
    q = t->t2;
    jtriangle_general_5_sub(q,t);

    /* Back scan */
    q = ang_fixup(q+TRIG_PI);
    jtriangle_general_5_sub(q,t);
}

void jtriangle_general( const struct packet_triangle * t )
{
    jtriangle_general_1(t);
    jtriangle_general_2(t);
```

```
    jtriangle_general_3(t);
    jtriangle_general_4(t);
    jtriangle_general_5(t);
}
```

## Claims

1. A method for rendering a two dimensional convex polytope in a volumetric display including an imaging screen rotating about a spin axis, said method comprising:

   partitioning said polytope into a plurality of polytope sections, each of said polytope sections being the set of points within the polytope disposed in an active slice defined by two bounding planes, an entry plane and an exit plane, both planes containing said spin axis; both planes containing said spin axis;
   determining when said imaging screen is within said active slice;
   while said imaging screen is within said active slice,
   defining a connecting polygon from a projection of said polytope section on said entry plane, and
   rendering said connecting polygon on said imaging screen.

2. The method of claim 1, wherein determining when an imaging screen is within said active slice comprises determining when said imaging screen is coplanar with said entry plane.

3. The method of claim 1, wherein determining when an imaging screen is within said active slice comprises determining when said imaging screen is coplanar with said exit plane.

4. The method of claim 1, further comprising selecting said polytope to be a planar figure.

5. The method of claim 4, wherein selecting said polytope to be a planar figure comprises selecting said polytope to be a triangle.

6. The method of claim 1, further comprising applying a transformation to correct for keystoning.

7. The method of claim 1, further comprising applying a transformation to correct for rotational distortion.

8. A method for rendering, on a volumetric display including an imaging screen rotating about a spin axis, having a plurality of voxels, a rasterized polytope that approximates a desired two dimensional convex polytope, said method comprising:

   positioning said screen at a first angular position in which said screen is coplanar with an entry plane;

   selecting a first plurality of voxels on said imaging screen, said first plurality of voxels corresponding to an intersection of said desired polytope with said entry plane;

   selecting a second plurality of voxels on said imaging screen, said second plurality of voxels corresponding to a projection, onto said entry planes, of the intersection of said desired polytope with an exit plane, said exit plane containing said spin axis,

   defining a polygon on said entry plane, said polygon having a boundary that includes said first and second pluralities of voxels; and

   rendering selected voxels on said imaging screen to fill said polygon.

## Patentansprüche

1. Verfahren zum Wiedergeben eines zweidimensionalen, konvexen Polytops auf einem volumetrischen Display, das einen Abbildungsschirm enthält, welcher sich um eine Drehachse dreht, wobei das Verfahren aufweist:

**EP 1 316 070 B1**

Aufteilen des Polytops in eine Mehrzahl von Polytopabschnitten, wobei jeder der Polytopabschnitte der Satz von Punkten innerhalb des Polytops ist, der in einer aktiven Scheibe angeordnet ist, welche durch zwei Grenzebenen, eine Eingangsebene und eine Ausgangsebene definiert ist, wobei beide Ebenen die Drehachse enthalten;

Bestimmen, wann der Abbildungsschirm sich innerhalb der aktiven Scheibe befindet;

während sich der Abbildungsschirm innerhalb der aktiven Scheibe befindet,

Definieren eines verbindenden Polytops aus einer Projektion des Polytopabschnitts auf die Eintrittsebene, und

Wiedergeben des verbindenden Polytops auf dem Abbildungsschirm.

**2.** Verfahren nach Anspruch 1, bei dem das Bestimmen, wann sich ein Abbildungsschirm innerhalb der aktiven Scheibe befindet, das Bestimmen, wann der Abbildungsschirm koplanar mit der Eingangsebene ist, aufweist.

**3.** Verfahren nach Anspruch 1, bei dem das Bestimmen, wann sich ein Abbildungsschirm innerhalb der aktiven Scheibe befindet, das Bestimmen, wann der Abbildungsschirm koplanar mit der Ausgangsebene ist, aufweist.

**4.** Verfahren nach Anspruch 1, das ferner das Auswählen des Polytops als eine plane Figur aufweist.

**5.** Verfahren nach Anspruch 4, bei dem das Auswählen des Polytops als eine plane Figur das Auswählen des Polytops als ein Dreieck aufweist.

**6.** Verfahren nach Anspruch 1, das ferner das Anwenden einer Transformation zur Korrektur von Keystoning aufweist.

**7.** Verfahren nach Anspruch 1, das ferner das Anwenden einer Transformation zur Korrektur von Rotationsverzerrung aufweist.

**8.** Verfahren zum Wiedergeben eines gerasterten Polytops, das ein gewünschtes zweidimensionales, konvexes Polytop annähert, auf einem volumetrischen Display, das einen Abbildungsschirm, der sich um eine Drehachse dreht, enthält und eine Mehrzahl von Voxeln aufweist, wobei das Verfahren aufweist:

Positionieren des Schirms in einer ersten Winkelposition, in der der Schirm koplanar mit einer Eingangsebene ist;

Auswählen einer ersten Mehrzahl von Voxeln auf dem Abbildungsschirm, wobei die erste Mehrzahl von Voxeln einem Schnittpunkt des gewünschten Polytops mit der Eingangsebene entspricht;

Auswählen einer zweiten Mehrzahl von Voxeln auf dem Abbildungsschirm, wobei die zweite Mehrzahl von Voxeln einer Projektion, auf die Eingangsebene, des Schnitts des gewünschten Polytops mit einer Ausgangsebene entspricht, wobei die Ausgangsebene die Drehachse enthält;

Definieren eines Polytops auf der Eingangsebene, wobei das Polytop eine Begrenzung aufweist, die die erste und zweite Mehrzahl von Voxeln enthält; und

Wiedergeben von ausgewählten Voxeln auf dem Abbildungsschirm zum Füllen des Polytops.

**Revendications**

**1.** Procédé pour la restitution d'un polytope convexe bidimensionnel dans un affichage volumétrique qui inclut un écran d'imagerie en rotation autour d'un axe de rotation, ledit procédé comprenant :

le partitionnement dudit polytope en une pluralité de tronçons de polytope, chacun desdits tronçons de polytope étant le groupe de points à l'intérieur du polytope qui est disposé dans une tranche active définie par deux plans frontières, à savoir un plan d'entrée et un plan de sortie, les deux plans contenant ledit axe de rotation ;

la détermination du moment où ledit écran d'imagerie se trouve dans ladite tranche active ;

et, alors que ledit écran d'imagerie se trouve dans ladite tranche active, la définition d'un polygone de connexion à partir d'une projection dudit tronçon de polytope sur ledit plan d'entrée, et

la restitution dudit polygone de connexion sur ledit écran d'imagerie.

**2.** Procédé selon la revendication 1, dans lequel la détermination du moment où un écran d'imagerie se trouve dans ladite tranche active comprend de déterminer le moment où ledit écran d'imagerie est coplanaire avec ledit plan d'entrée.

**13**

3. Procédé selon la revendication 1, dans lequel la détermination du moment où un écran d'imagerie se trouve dans ladite tranche active comprend de déterminer le moment où ledit écran d'imagerie est coplanaire avec ledit plan de sortie.

4. Procédé selon la revendication 1, comprenant en outre la sélection dudit polytope comme étant une figure plane.

5. Procédé selon la revendication 4, dans lequel la sélection dudit polytope comme étant une figure plane comprend de choisir ledit polytope comme étant un triangle.

6. Procédé selon la revendication 1, comprenant en outre d'appliquer une transformation pour corriger la distorsion trapézoïdale.

7. Procédé selon la revendication 1, comprenant en outre d'appliquer une transformation pour corriger la distorsion de rotation.

8. Procédé pour la restitution, sur un affichage volumétrique qui inclut un écran d'imagerie en rotation autour d'un axe de rotation ayant une pluralité de voxels, un polytope tramé qui est une approximation d'un polytope bidimensionnel convexe désiré, ledit procédé comprenant :

le positionnement dudit écran à une première position angulaire dans laquelle ledit écran est coplanaire avec un plan d'entrée ;
la sélection d'une première pluralité de voxels sur ledit écran d'imagerie, ladite première pluralité de voxels correspondant à une intersection dudit polytope désiré avec ledit plan d'entrée ;
la sélection d'une seconde pluralité de voxels sur ledit écran d'imagerie, ladite seconde pluralité de voxels correspondant à une projection, sur ledit plan d'entrée, de l'intersection dudit polytope désiré avec un plan de sortie, ledit plan de sortie contenant ledit axe de rotation ;
la définition d'un polygone sur ledit plan d'entrée, ledit polygone ayant une frontière qui inclut ladite première et ladite seconde pluralité de voxels ; et
la restitution des voxels sélectionnés sur ledit écran d'imagerie pour remplir ledit polygone.

FIG. 1

FIG. 2

# FIG. 3

FIG. 4